(19) Europäisches Patentamt / European Patent Office / Office européen des brevets

(11) **EP 3 618 304 B1**

(12) **EUROPEAN PATENT SPECIFICATION**

(45) Date of publication and mention of the grant of the patent:
**18.06.2025 Bulletin 2025/25**

(21) Application number: **18791062.5**

(22) Date of filing: **20.04.2018**

(51) International Patent Classification (IPC):
*H04B 7/145* (2006.01)   *H01Q 21/10* (2006.01)
*H04B 7/08* (2006.01)   *H04W 84/06* (2009.01)
*H04B 7/22* (2006.01)

(52) Cooperative Patent Classification (CPC):
**H04B 7/22; H01Q 21/10; H04B 7/08; H04B 7/145; H04W 84/06**

(86) International application number:
**PCT/JP2018/016345**

(87) International publication number:
**WO 2018/198987 (01.11.2018 Gazette 2018/44)**

(54) **RADIO COMMUNICATION DEVICE, RADIO RECEPTION DEVICE, AND RADIO COMMUNICATION SYSTEM**

FUNKKOMMUNIKATIONSVORRICHTUNG, FUNKEMPFANGSVORRICHTUNG UND FUNKKOMMUNIKATIONSSYSTEM

DISPOSITIF DE COMMUNICATION RADIO, DISPOSITIF DE RÉCEPTION RADIO, ET SYSTÈME DE COMMUNICATION RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2017 JP 2017088184**

(43) Date of publication of application:
**04.03.2020 Bulletin 2020/10**

(73) Proprietor: NEC Corporation
**Tokyo 108-8001 (JP)**

(72) Inventor: **YOKOTA, Nobuyuki**
**Tokyo 108-8001 (JP)**

(74) Representative: **Vossius & Partner**
**Patentanwälte Rechtsanwälte mbB**
**Siebertstrasse 3**
**81675 München (DE)**

(56) References cited:
EP-A1- 2 833 560    WO-A1-2016/094392
JP-A- 2003 515 262    JP-A- 2016 171 362
JP-A- H06 177 641    US-A- 3 307 188
US-A- 6 104 712    US-A1- 2015 189 651
US-B1- 8 570 227

## Description

[Technical Field]

The present invention relates to a radio wave communication device, a radio wave reception device, and a ratio wave communication system.

[Background Art]

Long distance over-the-Horizon communication (OH communication) using tropospheric scattering or diffraction has large propagation loss. To stabilize the carrier to noise (C/N) ratio, Patent Literature 1 discloses a device that limits a beam width of a transmission radio wave by using a parabolic antenna in over-the-horizon communication. Thereby, the device according to Patent Literature 1 performs long distance communication via a radio wave propagation path having large propagation loss.

US 3 307 188 A relates to a system for selectively phasing signals for beam steering, the system being configured for making possible substantially instantaneous change in beam direction.

[Citation List]

[Patent Literature]

PTL 1: Japanese Patent Publication No. S61-240721
PTL 2: Japanese Patent Publication No. 2000-101507

[Summary of Invention]

[Technical Problem]

However, since a parabolic antenna has a sharp directivity, a range used for communication is limited. For example, to transmit a radio wave to a large number of receiving stations, relay stations are required. Further, since the orientation of a parabolic antenna needs to be accurately directed to a receiving station, it is not possible to communicate with a moving unit or the like due to inflexibility in the directivity. Further, space diversity or route diversity is limited in a narrow range in accordance with a beam width of a parabolic antenna. Further, since a parabolic antenna is large, heavy, and expensive and is less likely to dissipate heat, an installation space or a peripheral device for heat dissipation is required. Therefore, the cost of the radio wave communication device increases.

The present invention has been made in view of the problems described above and intends to provide a radio wave communication device, a radio wave reception device, and a radio wave communication system that can perform over-the-horizon communication over a wide range without using a parabolic antenna.

[Solution to Problem]

According to one example aspect of the present invention, provided is a radio wave communication device having a dipole type transmission antenna used for performing over-the-horizon communication using tropospheric scattering or diffraction; and a signal processing unit that performs digital signal processing on a signal and outputs the signal to the transmission antenna.

Further, according to another example aspect, provided is a radio wave reception device having a parabolic type reception antenna that receives a radio wave transmitted from the radio wave communication device described above; and a signal processing unit that performs digital signal processing on a signal received by using the reception antenna.

Further, according to yet another example aspect, provided is a radio wave communication system having a dipole type transmission antenna and a parabolic type reception antenna that are used for performing over-the-horizon communication using tropospheric scattering or diffraction; and a signal processing unit that performs digital signal processing on a signal transmitted and received by the transmission antenna and the reception antenna.

[Advantageous Effects of Invention]

According to the present invention, it is possible to provide a radio wave communication device, a radio wave reception device, and a radio wave communication system that can perform over-the-horizon communication over a wide range.

[Brief Description of Drawings]

[Fig. 1]

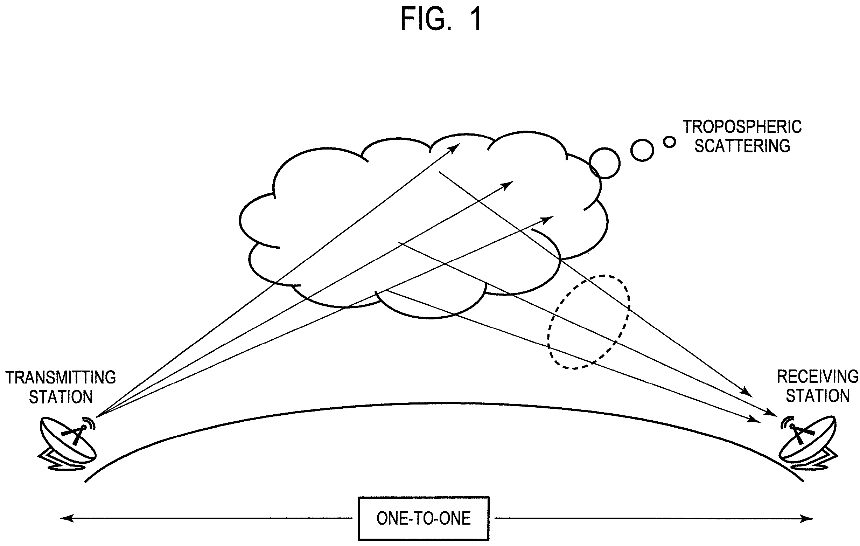

Fig. 1 is a diagram illustrating over-the-horizon communication using tropospheric scattering or diffraction.
[Fig. 2]

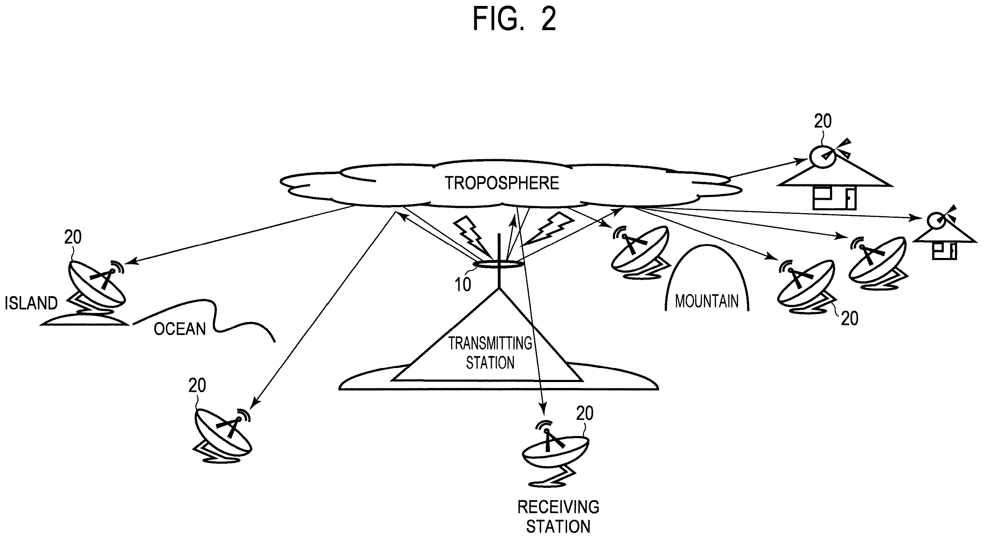

Fig. 2 is a diagram schematically illustrating a configuration of a radio wave communication system using a radio wave communication device according to a first example embodiment.
[Fig. 3A]

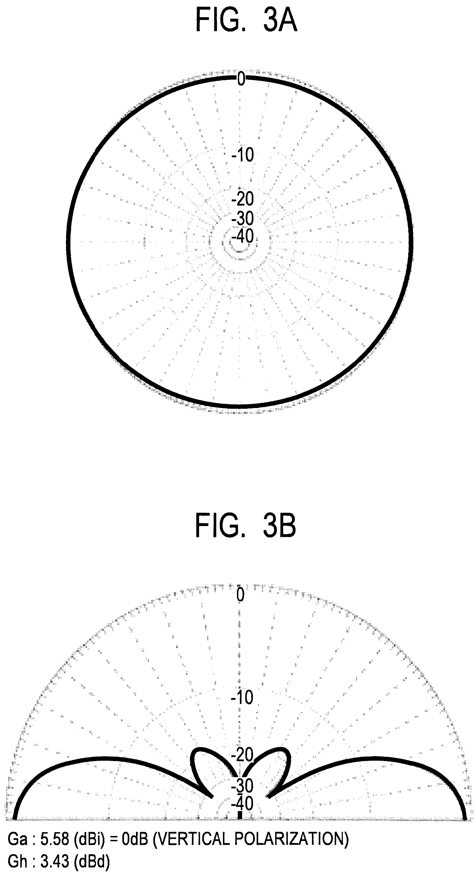

Fig. 3A is a diagram illustrating a directivity of a transmission antenna provided in the radio wave communication device according to the first example embodiment.
[Fig. 3B]
Fig. 3B is a diagram illustrating a directivity of the transmission antenna provided in the radio wave communication device according to the first example embodiment.
[Fig. 4A]

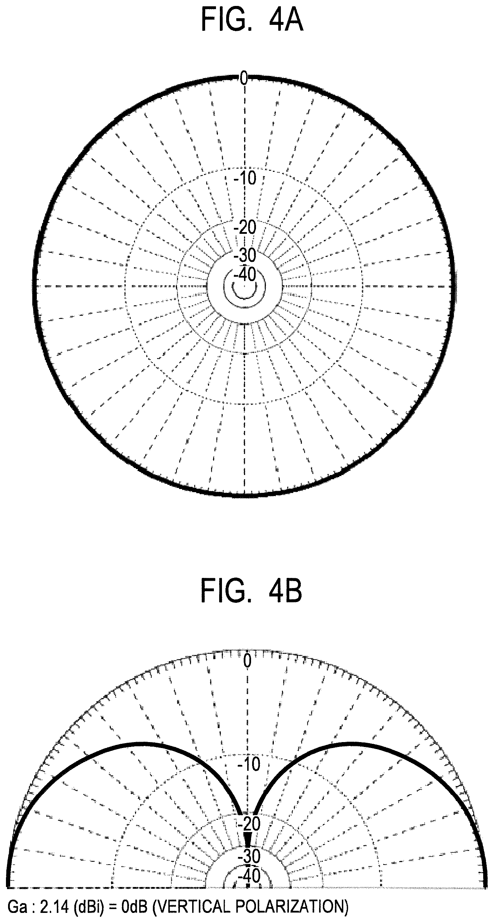

Fig. 4A is a diagram illustrating a directivity of the transmission antenna provided in the radio wave communication device according to the first example embodiment.
[Fig. 4B]
Fig. 4B is a diagram illustrating a directivity of the transmission antenna provided in the radio wave communication device according to the first example embodiment.
[Fig. 5A]

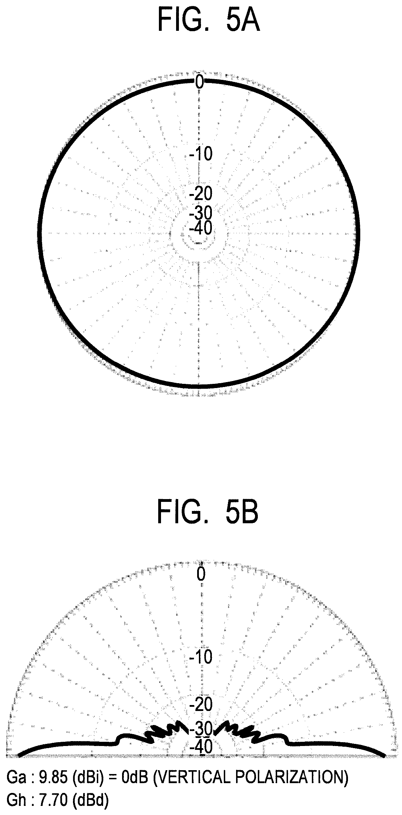

Fig. 5A is a diagram illustrating a directivity of the transmission antenna provided in the radio wave communication device according to the first example embodiment.
[Fig. 5B]
Fig. 5B is a diagram illustrating a directivity of the transmission antenna provided in the radio wave communication device according to the first example embodiment.
[Fig. 6]

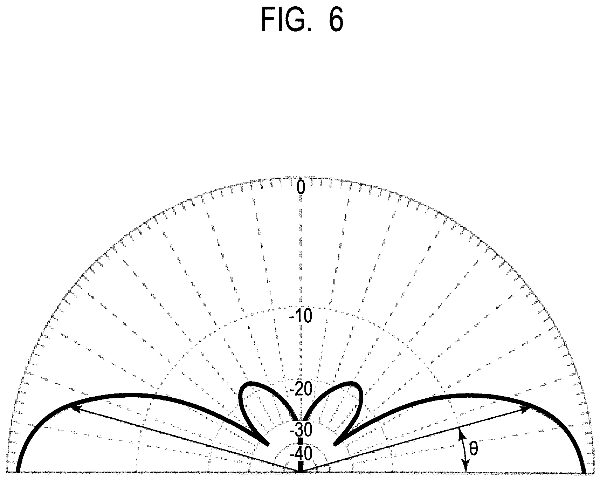

Fig. 6 is a diagram illustrating a beam width in the vertical plane of the transmission antenna of the radio wave communication device according to the first example embodiment.
[Fig. 7]

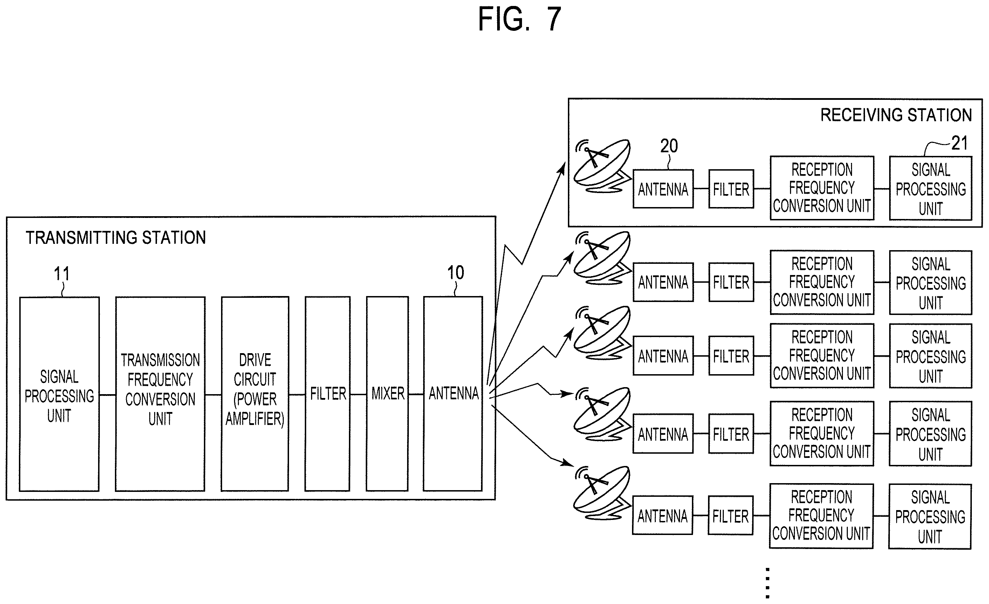

Fig. 7 is a diagram illustrating a configuration example of a radio wave communication system according to the first example embodiment.
[Fig. 8]

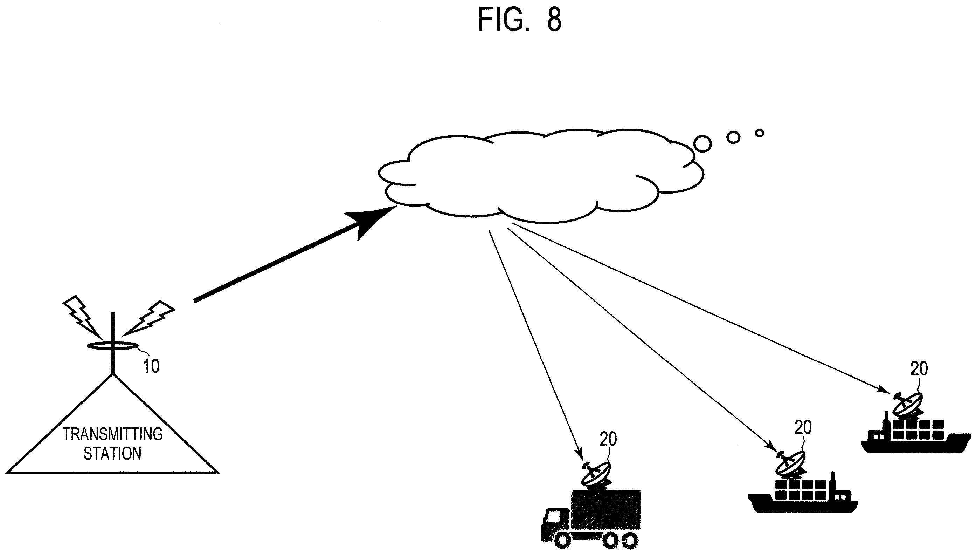

Fig. 8 is a diagram illustrating an example of a radio wave reception device according to the first example embodiment.
[Fig. 9]

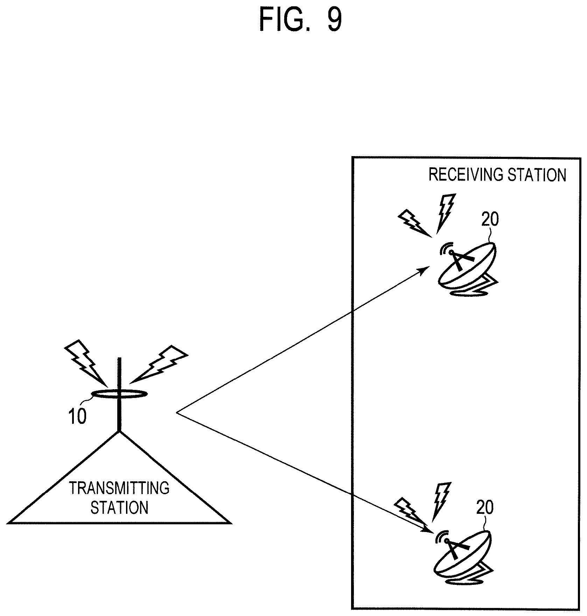

Fig. 9 is a diagram illustrating an example of the radio wave reception device according to the first example embodiment.

[Description of Embodiments]

Fig. 1 is a diagram illustrating over-the-horizon communication using tropospheric scattering or diffraction. Fig. 1 illustrates the conventional over-the-horizon communication that uses a parabolic antenna as a transmission antenna. Over-the-horizon communication here refers to communication performed via a radio wave propagation path using tropospheric scattering or diffraction between antennas for transmission and reception arranged away from each other over a long distance so that one is unable to see the other. Over-the-horizon communication is also referred to as over-the-horizon communication (OH communication).
Note that radio wave communication over a short distance in which one cannot see another simply due to an obstacle such as a building or the like is distinguished from the over-the-horizon communication described here. In over-the-horizon communication using tropospheric scattering or diffraction, a transmission antenna and a reception antenna are generally arranged away from each other over a long distance by 100 km or longer. Since the propagation loss of over-the-horizon communication is significantly large, a large gain is necessary. Therefore, a radio wave communication system generally needs to be formed by using a large antenna having an aperture diameter of 3 meters or larger, a drive circuit that supplies 30 W or more, and a reception antenna with high sensitivity.
Over-the-horizon communication is used for application such as TV broadcasting, alternative communication such as satellite broadcasting, a disaster relief operation, broadband wireless communication for deployment of the Maritime and Ground Self-Defense Forces whose communication can be prepared quickly compared to wired communication, Electronic Countermeasures (ECM), or the like. Further, over-the-horizon communication is also used for communication broadcasting to a plurality of remote islands distributed in a wide range.

As described above, however, when over-the-horizon communication is performed by using a parabolic antenna as a transmission antenna, the range used for communication is limited due to the sharp directivity. Therefore, the conventional over-the-horizon communication has to be one-to-one communication as illustrated in Fig. 1. Accordingly, a method for performing over-the-horizon communication in a wider range will be considered in the example embodiment below.

The example embodiments of the present invention will be described below by using the drawings. Note that the present invention is not limited to the example embodiment described below and can be appropriately changed within the scope of the present invention. Note that, in the drawings, components having the same or corresponding functions are labeled with the same references, and the description thereof may be omitted or simplified.

[First Example Embodiment]

Fig. 2 is a diagram schematically illustrating a configuration of a radio wave communication system using a radio wave communication device according to a first example embodiment. The radio wave communication device of the present example embodiment arranged in a transmitting station illustrated in the center of Fig. 2 has a transmission antenna 10. The transmitting station uses the transmission antenna 10 and performs over-the-horizon communication using tropospheric scattering or diffraction with a reception antenna 20 arranged in a receiving station at a long distance where one cannot see another.

Fig. 3A to Fig. 5B are diagrams each illustrating a directivity of the transmission antenna 10 provided in the radio wave communication device according to the first example embodiment. Each directivity illustrated in Fig. 3A to Fig. 5B is calculated by a simulation, and each absolute gain (dBi) calculated when an isotropic antenna is used as a reference is represented. The frequency of a radio wave used for over-the-horizon communication is 1000 MHz.

Each of Fig. 3A, Fig. 3B, Fig. 4A, and Fig. 4B illustrates a simulation result of a directivity when the transmission antenna 10 is a dipole type antenna. Each of Fig. 3A and Fig. 3B illustrates the directivity of the transmission antenna 10 when a plurality of vertically polarized dipole elements are used, and each of Fig. 4A and Fig. 4B illustrates the directivity of the transmission antenna 10 when a single vertically polarized dipole element is used. Vertical polarization here means that an oscillation direction of the electric field output from the dipole element is perpendicular to the ground surface. Fig. 3A and Fig. 4A each illustrate a directivity pattern in the horizontal plane, and Fig. 3B and Fig. 4B each illustrate a directivity pattern in the vertical plane.

Unlike a parabolic antenna, the directivity of the transmission antenna 10 of the present example embodiment in the horizontal plane is not sharp as illustrated in Fig. 3A and Fig. 4A. Therefore, according to the dipole type transmission antenna 10 described above, over-the-horizon communication can be performed over a wider range. In particular, when the transmission antenna 10 is formed by using a vertically polarized dipole element, a directivity pattern of a beam in the horizontal plane is substantially non-directional. Further, with a dipole type antenna, it is also possible to adjust the directivity by arranging a reflector.

By forming an array antenna such as a series-connected collinear array antenna by using more dipole elements, it is possible to obtain a non-directional antenna having a higher gain. Each of Fig. 5A and Fig. 5B illustrates a simulation result of the directivity of the transmission antenna 10 when a series-connected collinear array antenna is formed by aligning 13 vertically polarized dipole elements on a single line (in the vertical direction). Fig. 5A illustrates a directivity pattern in the horizontal plane, and Fig. 5B illustrates a directivity pattern in the vertical plane.

As illustrated in Fig. 5A, even when the transmission antenna 10 is an array antenna, the directivity pattern of the beam in the horizontal plane is still non-directional. Therefore, by using the array antenna described above, over-the-horizon communication can be performed over a longer distance in a wide range.

Next, the beam width of the dipole type transmission antenna 10 will be considered. Fig. 6 is the same diagram as Fig. 3B described above and illustrates a beam width in the vertical plane when the transmission antenna 10 is formed by using vertically polarized dipole elements.

The half width at half maximum θ of a beam of an antenna is defined in both the horizontal plane and the vertical plane. The half width at half maximum θ of a beam is defined as an angular width at which the gain in a directivity pattern of an antenna is half the maximum (-3dB) in any plane. For example, the half width at half maximum θ of a beam in the vertical plane of the transmission antenna 10 of the present example embodiment illustrated in Fig. 6 is around 16 degrees. A beam width in the vertical plane of the dipole type transmission antenna 10 is theoretically approximated by Equation (1) below.

$$Beam\ width\ =\ 50.6\ degrees\ \times\ \lambda/antenna\ length\ ...Equation\ (1)$$

As illustrated in Fig. 5A and Fig. 5B, the beam width in the vertical plane of the transmission antenna 10 becomes narrower as the number of dipole elements forming the array antenna is increased. Therefore, when the transmission antenna 10 is an array antenna, the beam width in the vertical plane of the transmission antenna 10 can be adjusted by changing the length of the antenna or the number of dipole elements. Therefore, the beam width of the transmission antenna 10 can be set to a desirable value in accordance with a condition such as a tropospheric state, a communication distance, a communication range, or the like. Further, it is noted that there is a characteristic in which a beam width of a main lobe becomes wider when antennas are arranged in accordance with a Chebyshev array distribution or a Taylor array distribution and a side lobe is reduced or the like.

On the other hand, each of the beam widths in the vertical plane and the horizontal plane of a parabolic antenna is theoretically approximated by Equation (2) below.

$$Beam\ width\ =\ 70\ degrees\ \times\ \lambda/antenna\ diameter\ ...Equation\ (2)$$

Generally, the aperture diameter of a parabolic antenna used for over-the-horizon communication exceeds 3 meters. For example, with an antenna having a frequency of 1000 MHz (wavelength $\lambda = 0.3$ m) and a diameter of 3 m, the beam width calculated by the Equation (2) described above is 7 degrees. As described above, since a parabolic antenna has a sharp directivity in the horizontal plane and outputs a radio wave only forward, a communication range is limited.

Next, it was considered by a simulation whether or not communication can be performed via a radio wave propagation path of over-the-horizon communication having large propagation loss even when the dipole type antenna 10 is used instead of a parabolic antenna. The distance from the transmission antenna 10 to the reception antenna 20 is assumed to be 100 km, and an equation or the like used for a simulation quotes ITU-R-REC-P.617-3.

For the carrier to noise (C/N) ratio, 22 dB used for TV digital broadcasting is used as an index. The frequency f of a radio wave used for over-the-horizon communication was 1000 MHz. The transmission antenna 10 was an array antenna, and the antenna gain $G_t$ was 14 (dBi). The reception antenna 20 was a parabolic type antenna having an aperture efficiency of 70% and an aperture diameter of 19 m$\varphi$, and the antenna gain $G_r$ was 45 (dBi). Further, other parameter values were assumed as described below.

Transmission capacity: 17 Mbps
Interference noise: 30 dB
Stationary noise: 30 dB
Noise figure: 1.5 dB
Propagation distance: 100 km
Ground height of transmitting and receiving stations: both 100m
Feeder loss: 2 dB

Fundamental propagation loss L (q) in troposphere scattering was calculated by Equation (3) described below.

$$L(q)\ =\ M\ +30logf\ +\ 10log\theta\ +\ L_N\ +\ L_C\ -\ G_t\ -\ G_r\ -\ Y(q)\ ...Equation\ (3)$$

Here, M denotes loss due to a meteorological parameter, f denotes a frequency, $L_N$ denotes loss due to the height of a scattering region, $L_c$ denotes antenna coupling loss, $G_t$ denotes antenna gain on the transmission side, $G_r$ denotes antenna gain on the receiving side, and Y(q) denotes a parameter due to line quality.

The basic propagation loss L(q) was 167.2 dB under the condition where the standard reception input level C/N ratio = 22 (dB) and the line quality is 99.9%, and the value of the required transmission power calculated taking each parameter into consideration was 43.7 (dB). This value corresponds to 24 W when converted to electric power, and this can also be realized by a drive circuit or a power amplifier (PA) having power supply that is less than or equal to 30 W.

Furthermore, since the calculation result indicates that the required transmission power is 224 W when a propagation distance is assumed to be 110 km and 800 W when a propagation distance is assumed to be 120 km, it is possible to perform radio wave propagation while satisfying a high C/N ratio over a wide range with a PA having power supply that is less than 1 kW. Obviously, the communication range can be further expanded when a simulation is performed using a C/N ratio of BS broadcasting, namely 11 dB, which is similar in terms of long distance radio wave propagation.

Further, even when calculation is performed while changing the parameters of an elevation angle and a depression angle from 1 degree in taking a beam width in the vertical plane into consideration, the result was that broadband communication of within 120 km is possible with a PA having power supply that is less than 1 kW. Therefore, it was found that communication can be performed via a radio wave propagation path of over-the-horizon communication having large propagation loss even when the dipole type transmission antenna 10 is used instead of a parabolic antenna.

Fig. 7 is a diagram illustrating a configuration example of a radio wave communication system using the radio wave communication device according to the first example embodiment. With the configuration of a transmitting station having the dipole type transmission antenna 10 and a receiving station having the parabolic type reception antenna 20 as illustrated in Fig. 7, a radio wave communication system that performs over-the-horizon communication over a wide range can be realized. Therefore, for example, diversity (space diversity or route diversity) or communication broadcasting to a plurality of remote islands distributed over a wide range can be realized.

Further, as illustrated in Fig. 7, with signal processing units 11 and 21 that perform digital signal processing such as error correction code, FFT, digital filtering, or the like being provided to the transmitting station and the receiving station, respectively, it is possible to improve the C/N ratio by compensating for propagation loss in the radio wave propagation path.

In conventional over-the-horizon communication using a parabolic antenna as a transmission antenna, communication has to be one-to-one communication as illustrated in Fig. 1. However, the radio wave communication device of the present example embodiment using the dipole type transmission antenna 10 can perform over-the-horizon communication over a wide range. Fig. 8 and Fig. 9 are diagrams each illustrating an example of a radio wave reception device according to the first example embodiment.

In the present example embodiment, for example, as illustrated in Fig. 8, over-the-horizon communication can be performed on a plurality of moving units at the same time. Further, as illustrated in Fig. 9, a range in which space diversity or route diversity is performed is not limited to a narrow range. Specifically, a receiving station receives a radio wave transmitted from the transmission antenna 10 of the transmitting station by using a plurality of reception antennas 20. Further, diversity is realized by switching or combining signals received by a plurality of reception antennas 20.

As described above, the radio wave communication device of the present example embodiment has a dipole type transmission antenna used for performing over-the-horizon communication using tropospheric scattering or diffraction and a signal processing unit that performs digital signal processing on a signal to output the signal to the transmission antenna. It is therefore possible to provide a radio wave communication device, a radio wave reception device, and a radio wave communication system that can perform over-the-horizon communication over a wide range. Further, the transmission antenna is not limited to the parabolic type, and the cost of the radio wave communication device can be reduced.

Note that the example embodiment described above merely illustrates an embodied example in implementing the present invention, and the technical scope of the present invention should not be construed in a limiting sense by the example embodiment. That is, the present invention can be implemented in various forms without departing from the technical concept or the primary features thereof. For example, while Fig. 5A and Fig. 5B illustrate directivity patterns of a collinear array antenna as an example of a dipole type array antenna, a ground plane antenna, a sector antenna, a Yagi antenna, a loop antenna, or the like can also be used as a dipole type array antenna.

Further, while the frequency of the radio wave used for over-the-horizon communication is 1000 MHz in the example embodiment described above, it is not limited thereto. The frequency of the radio wave used for over-the-horizon communication may be a frequency that is lower than or equal to 5000 MHz that is scattered or diffracted by the troposphere and is desirably higher than or equal to 200 MHz or lower than or equal to 3000 MHz.

This application is based upon and claims the benefit of priority from Japanese Patent Application No. 2017-088184, (original published format: JP 2017088184), filed on April 27, 2017.

**Claims**

1. A radio wave communication system comprising:

   a dipole type transmission antenna (10) formed by using a vertically polarized dipole element, and transmitting signals to a plurality of receiving stations and used for performing over-the-horizon communication using tropospheric scattering or diffraction with a range of radio wave frequencies from 200 MHz to 5000 MHz, the signal having a non-directional pattern of beam in a horizontal plane;
   a signal processing unit (11) that performs digital signal processing on the signal and outputs the signal to the transmission antenna (10); and
   a plurality of parabolic type reception antennas (20) equipped in the plurality of receiving stations, respectively, and receiving the signals transmitted from the dipole type transmission antenna (10).

2. The radio wave communication system according to claim 1, wherein the transmission antenna (10) is an array antenna.

3. The radio wave communication system according to claim 2, wherein the transmission antenna (10) is a collinear array antenna using a vertically polarized dipole element.

4. The radio wave communication system according to any one of claims 1 to 3, wherein the transmission antenna (10) has a half width at half maximum of a beam in the vertical plane that is less than or equal to 16 degrees.

5. The radio wave communication system according to any one of claims 1 to 4, wherein over-the-horizon communication is performed with a radio wave reception device that is distant by 100 km or more.

6. The radio wave communication system according to any one of claims 1 to 5, wherein a radio wave frequency used for over-the-horizon communication is higher than or equal to 200 MHz and lower than or equal to 3000 MHz.

7. The radio wave communication system according to any one of claims 1 to 6 further comprising a drive circuit that drives the transmission antenna (10),
wherein power supply of the drive circuit is lower than or equal to 30 W.

8. The radio wave communication system according to any one of claims 1 to 7 further comprising:

a plurality of second signal processing units (21) that performs digital signal processing on the signals received by the plurality of parabolic type reception antennas (20),
wherein the plurality of signal processing units (21) switches or combines the signals received by the plurality of parabolic type reception antennas (20).


**Patentansprüche**

1. Funkwellenkommunikationssystem, das aufweist:

eine Dipol-Übertragungsantenne (10), die unter Verwendung eines vertikal polarisierten Dipolelements ausgebildet ist und Signale an mehrere Empfangsstationen überträgt und verwendet wird, um unter Verwendung troposphärischer Streuung oder Beugung mit einem Bereich von Funkwellenfrequenzen von 200 MHz bis 5000 MHz eine Over-the-Horizon-Kommunikation durchzuführen, wobei das Signal in einer Horizontalebene ein ungerichtetes Strahlmuster hat;
eine Signalverarbeitungseinheit (11), die eine digitale Signalverarbeitung für das Signal durchführt und das Signal an die Übertragungsantenne (10) ausgibt; und
mehrere Parabol-Empfangsantennen (20), mit denen die mehreren Empfangsstationen jeweils ausgerüstet sind und welche die von der Dipol-Übertragungsantenne übertragenen Signale empfangen.

2. Funkwellenkommunikationssystem nach Anspruch 1, wobei die Übertragungsantenne (10) eine Gruppenantenne ist.

3. Funkwellenkommunikationssystem nach Anspruch 2, wobei die Übertragungsantenne (10) eine kollineare Gruppenantenne ist, die ein vertikal polarisiertes Dipolelement verwendet.

4. Funkwellenkommunikationssystem nach einem der Ansprüche 1 bis 3, wobei die Übertragungsantenne (10) eine halbe Breite bei halbem Maximalwert eines Strahls in der Vertikalebene hat, die kleiner oder gleich 16 Grad ist.

5. Funkwellenkommunikationssystem nach einem der Ansprüche 1 bis 4, wobei die Over-the-Horizon-Kommunikation mit einer Funkwellenempfangsvorrichtung durchgeführt wird, die um 100 km oder mehr beabstandet ist.

6. Funkwellenkommunikationssystem nach einem der Ansprüche 1 bis 5, wobei eine Funkwellenfrequenz, die für die Over-the-Horizon-Kommunikation verwendet wird, größer oder gleich 200 MHz oder kleiner oder gleich 3000 MHz ist.

7. Funkwellenkommunikationssystem nach einem der Ansprüche 1 bis 6, das ferner eine Ansteuerschaltung, welche die Übertragungsantenne (10) ansteuert, aufweist,

wobei die Leistungsversorgung der Ansteuerschaltung kleiner oder gleich 30 W ist.

8. Funkwellenkommunikationssystem nach einem der Ansprüche 1 bis 7, das ferner aufweist:

mehrere zweite Signalverarbeitungseinheiten (21), die eine digitale Signalverarbeitung für die von den mehreren Parabol-Empfangsantennen (20) empfangenen Signale durchführen,
wobei die mehreren Signalverarbeitungseinheiten (21) die von dem mehreren Parabol-Empfangsantennen (20) empfangenen Signale schalten oder kombinieren.

**Revendications**

1. Système de communication par ondes radio comprenant :

une antenne d'émission de type dipôle (10) formée en utilisant un élément dipôle à polarisation verticale, et émettant des signaux vers une pluralité de stations de réception et utilisée pour réaliser une communication transhorizon en utilisant une diffusion ou une diffraction troposphérique avec une plage de fréquences d'ondes radio de 200 MHz à 5000 MHz, le signal ayant un motif de faisceau non directionnel dans un plan horizontal ;
une unité de traitement de signal (11) qui réalise un traitement de signal numérique sur le signal et délivre le signal à l'antenne d'émission (10) ; et
une pluralité d'antennes de réception de type parabolique (20) installées dans la pluralité de stations de réception, respectivement, et recevant les signaux émis par l'antenne d'émission de type dipôle (10).

2. Système de communication par ondes radio selon la revendication 1, dans lequel l'antenne d'émission (10) est une antenne réseau.

3. Système de communication par ondes radio selon la revendication 2, dans lequel l'antenne d'émission (10) est une antenne réseau colinéaire utilisant un élément dipôle à polarisation verticale.

4. Système de communication par ondes radio selon l'une quelconque des revendications 1 à 3, dans lequel l'antenne d'émission (10) présente une demi-largeur à mi-hauteur d'un faisceau dans le plan vertical qui est inférieure ou égale à 16 degrés.

5. Système de communication par ondes radio selon l'une quelconque des revendications 1 à 4, dans lequel la communication transhorizon est réalisée avec un dispositif de réception d'ondes radio qui est éloigné de 100 km ou plus.

6. Système de communication par ondes radio selon l'une quelconque des revendications 1 à 5, dans lequel une fréquence d'onde radio utilisée pour la communication transhorizon est supérieure ou égale à 200 MHz et inférieure ou égale à 3000 MHz.

7. Système de communication par ondes radio selon l'une quelconque des revendications 1 à 6 comprenant en outre un circuit de commande qui commande l'antenne d'émission (10),
dans lequel l'alimentation électrique du circuit de commande est inférieure ou égale à 30 W.

8. Système de communication par ondes radio selon l'une quelconque des revendications 1 à 7 comprenant en outre :

une pluralité de deuxièmes unités de traitement de signal (21) qui réalise un traitement de signal numérique sur les signaux reçus par la pluralité d'antennes de réception de type parabolique (20),
dans lequel la pluralité d'unités de traitement de signal (21) commute ou combine les signaux reçus par la pluralité d'antennes de réception de type parabolique (20).

FIG. 1

# FIG. 2

EP 3 618 304 B1

## FIG. 3A

## FIG. 3B

Ga : 5.58 (dBi) = 0dB (VERTICAL POLARIZATION)
Gh : 3.43 (dBd)

## FIG. 4A

## FIG. 4B

Ga : 2.14 (dBi) = 0dB (VERTICAL POLARIZATION)

# FIG. 5A

# FIG. 5B

Ga : 9.85 (dBi) = 0dB (VERTICAL POLARIZATION)
Gh : 7.70 (dBd)

# FIG. 6

## FIG. 7

EP 3 618 304 B1

# FIG. 8

# FIG. 9

RECEIVING STATION

20

20

TRANSMITTING
STATION

10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3307188 A
- JP S61240721 A
- JP 2000101507 A
- JP 2017088184 A
- JP 2017088184 B